# EUROPEAN PATENT SPECIFICATION

(11) **EP 1 517 343 B1**
(45) Date of publication and mention of the grant of the patent: **31.05.2006**
(21) Application number: 04027628.9
(22) Date of filing: 07.01.2003
(51) Int. Cl.: H01G 4/35

(54) **Capacitor for magnetron of a microwave oven**
Kondensator für das Magnetron eines Mikrowellenofens
Condensateur pour le magnétron d'un four à micro-ondes

(30) Priority: 06.02.2002 KR 2002006762; 28.02.2002 KR 2002010741
(43) Date of publication of application: 23.03.2005
(62) Divisional of application: 03250075.3
(73) Proprietor: Daewoo Electronics Corporation, Seoul (KR)
(72) Inventor: Hong, Won-Pyo, Sosa-gu Bucheon-si Gyeonggi-do (KR)
(74) Representative: Needle, Jacqueline

(56) References cited:
- EP-A- 0 259 766
- US-A- 4 797 596

## Description

The present invention relates to a capacitor as define in claim 1 for a magnetron of a microwave oven. Specifically the capacitor for a magnetron of a microwave oven should be capable of effectively shielding noise generated from the magnetron of the microwave oven.

Generally, various apparatuses such as home microwave ovens, commercial thawing machines, industrial dryers and the like using microwaves include a magnetron for generating the microwaves and a capacitor for shielding noises.

The magnetron for generating the microwaves is provided in an electric field space of the microwave oven. Microwaves are generated when a high voltage conducted by first and second conductive coils of a high voltage transformer attached on a substrate in the electromagnetic field space is stably supplied to the magnetron. The high voltage is generated by a conducting action of the conduction coils. Such microwaves are emitted through an irradiating tube in a cooking chamber.

After passing through the irradiating tube, the microwaves are emitted in the cooking chamber to heat and to cook foods placed in the cooking chamber.

The electric power line of the magnetron is mainly comprised of a filament, cathode and anode. When high voltage is applied to the magnetron to generate microwaves, microwaves having a basic frequency suitable for heating food are emitted, together with unnecessary microwaves, and as a result noise is generated. Then, the noise flows backward through the filament and the cathode to conduct wave interruptions to adjacent appliances.

Television broadcasting systems using satellites are widely used. Here, the unnecessary microwaves of the magnetron interact with the broadcasting frequency so as to obstruct the television receiver.

A choke coil and a capacitor connected thereto are provided to the cathode in order to reduce the reverse effect on adjacent appliances by the noise of the magnetron. The cathode supplies electricity to the filament. The choke coil having a conductive resistance and the capacitor connected thereto absorb the unnecessary microwaves, thereby preventing leakage of the unnecessary microwaves.

The choke coil is enclosed within the insulation case which is provided under the magnetron, while the capacitor is mounted outside of the insulation case. One end of the choke coil is connected to the power supply line of the filament, of which the other end is connected to a lead line of the capacitor.

A through type capacitor is widely used, as disclosed in U.S. patent No. 4,811,161. In a magnetron using a through type capacitor, the choke coil is connected in series between the cathode of the magnetron and a through conductor of the through type capacitor, and the through type conductor is inserted in a sidewall of the through type capacitor. In US-A-4797596 a filter for a magnetron is disclose.

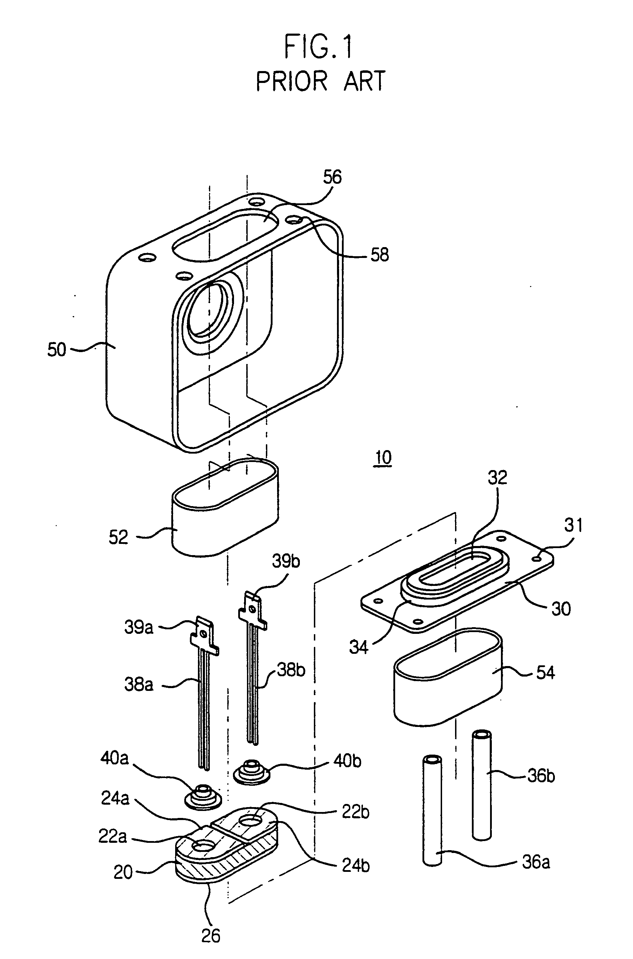

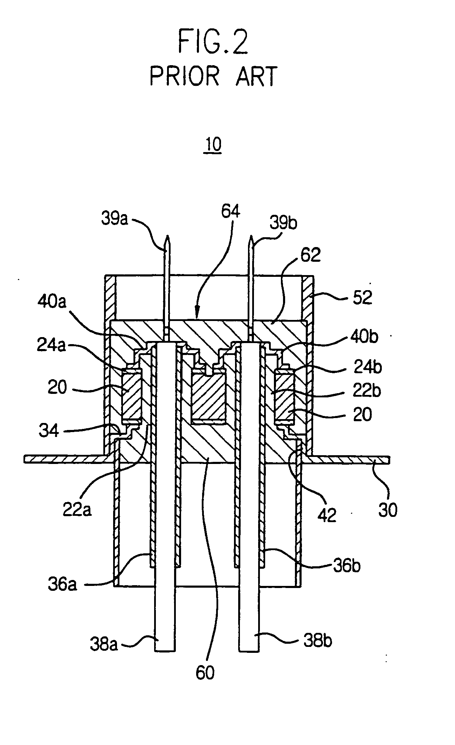

Figure 1 is an exploded perspective view of a noise insulation apparatus including a through type capacitor according to the prior art, and Figure 2 is a sectional view of the through type capacitor shown in Figure 1.

As shown in Figures 1 and 2, the conventional through type capacitor 10 includes an ellipse ceramic dielectric 20. The ceramic dielectric 20 has a pair of parallel through-holes 22a and 22b. A spaced pair of electrodes 24a and 24b is provided on an upper surface of the ceramic dielectric 20 while a common electrode 26 is provided on a lower surface of the dielectric 20. The spaced electrodes 24a and 24b, and the common electrodes 26 respectively comprise through-holes corresponding to the through-holes 22a and 22b of the ceramic dielectric 20. The capacitor 10 further includes a grounding fitment 30 of metal material of which an ellipse opening 32 is formed at the centre portion. An upstanding is formed at a desired height along a periphery of the opening on the grounding fitment 30. The ceramic dielectric 30 is fixed via the common electrode 26 on the upstanding of the grounding fitment 30 in a suitable manner of soldering or the like.

Furthermore, the capacitor 10 includes a pair of conductors coated with insulation tubes 36a and 36b. The insulation tubes 36a and 36b are made of a proper material such as silicon and the like. The insulation tubes 36a and 36b are respectively inserted into the respective through-holes 22a and 22b. The opening 32 and the through conductors 38a and 38b are respectively fitted to the respective electrode connectors 40a and 40b by pressing. The respective electrode connectors 40a and 40b are fixed to the spaced electrodes 24a and 24b in a proper manner of soldering or the like. The through conductors 38a and 38b may be fixed to the electrode connectors 40a and 40b by soldering or the like.

The grounding fitment 30 is formed by pressing a metal plate so that the upstanding 34 is projected to enclose the opening 32 and so that a surface of the grounding fitment 30 has a recess 42 to form an inner surface of the upstanding 34. Four through-holes 31 are formed at four corners of the grounding fitment 30, through which the grounding fitment 30 can be attached to the shielding case 50.

The capacitor 10 further includes an insulation case 52 enclosing the ceramic dielectric 20 and an insulation cylinder 54 enclosing the through conductors 38a and 38b. A lower portion of the insulation case 52 is fixed to the upstanding 34 of the grounding fitment 30 while an upper portion of the insulation cylinder 54 is fixed into the recess 42 of the grounding fitment 30. The insulation case 52 and the insulation cylinder 54 are filled with insulation materials 60 and 62 such as epoxy resin and the like so that the ceramic dielectric 20 is covered with the resin or in which the resin is filled in order to be waterproof and to secure insulation property of the ceramic dielectric 20. The reference numeral 64 denotes a surface of the insulation resin in Figure 2. The insulation case 52 and the insulation cylinder 54 are made of thermoplastic resin such as polybutylene terepthalate (PBT).

The respective through conductors 38a and 38b have respective fixing tabs 39a and 39b integrally formed at an end thereof, which are received in the insulation case 52 to apply high voltage. Since one end of each of the fixing tabs 39a and 39b is projected through one end of the insulation case 52, the fixing tabs 39a and 39b are easily connected to an outer terminal.

When the grounding fitment 30 is fixedly pressed to the shielding case 50, a large opening 56 corresponding to the capacitor 10 and four bearing holes 58 corresponding to four through-holes 31 of the grounding fitment 30 are formed in the shielding case 50. Then, the bearing holes 58 face the through-holes 31 so that the grounding fitment 30 can be assembled to the shielding case 50 by means of bolts.

The through type capacitor 10 connecting the choke coil of the shielding case 50 to the outer terminal prevents noise from being conducted through the lead line, which shields the radiated noises.

As described above, however, since the known apparatus for shielding the noise from the magnetron includes a plurality of assembling parts, the structure of the apparatus is complicated such that the cost of material increases and the assembling process becomes very difficult therefore reducing productivity. Furthermore, after assembling, some microwaves may leak through the inserting hole of the shielding case, the through-holes of the grounding fitment and the bearing holes of the shielding case, failing to effectively shield the noise.

It is an object of the present invention to provide a capacitor that reduces some of the problems mentioned above.

According to a first aspect of the present invention, there is provided a capacitor for a magnetron of a microwave oven comprising:
an insulation case having a pair of electrode insulating pipes respectively and integrally formed at a predetermined distance from each other on the insulation case;
a ground plate which is combined with the insulation case for absorbing and shielding noise such as unnecessary microwaves generated from the magnetron, the ground plate having an upright portion upwardly arising at a desired height and a pair of through-holes formed at a predetermined distance from each other in the upright portion; and
a pair of electrodes each having a respective fixing tab, the electrodes being arranged to extend through the insulation case and the ground plate, for supplying electric current to the magnetron,
wherein the electrode insulating pipes extend through the through-holes of the upright portion; and
the diameters of the electrode insulating pipes become small at a position near a lower end portion of the insulation case.

Preferably, the insulation case is combined with the ground plate such that the pair of electrode insulating pipes of the insulation case extend through the ground plate, and the pair of electrodes respectively extend through the electrode insulating pipes.

Preferably, the capacitor further comprises a cover for fixing the pair of electrodes, wherein the fixing cover is disposed over upper ends of the electrode insulating pipes of the insulation case such that the tabs of the pair of electrodes extend through the fixing cover.

The upwardly rising upright portion may be formed at a surface of the ground plate, is preferably elliptical, and may be provided with an aperture through which a fixing pipe extending from the fixing cover extends.

Preferably, a flange portion having a desired length is integrally formed around through-holes formed in the upright portion of the ground plate.

In an embodiment of a capacitor as described above, the ground plate formed with flanges can shield the microwave noise generated from the magnetron, thereby reducing electric wave obstruction applied by the noise to home appliances near the microwave oven.

A space defined by the insulation case and the ground plate is preferably filled with insulating resin and/or with electric wave absorbing material to prevent leakage of the microwave noise.

Preferably, the electric wave absorbing materials is a mixture of ferromagnetic powder and organic insulation material.

Preferably, insulating tubes are coated at respective lower ends of the electrode insulating pipes to prevent electric arc from being generated on peripheral surfaces of the electrode insulating pipes.

Since a part such as a ceramic dielectric adopted to the conventional capacitor is not used in the capacitor described, it is possible to simplify the structure of the capacitor and to reduce the cost of manufacturing the capacitor. In addition, there is an advantage in that since the structure of the capacitor is simplified, the rate of assembling the capacitor is improved to thereby increase the productivity.

Embodiments of the present invention will hereinafter be described, by way of example, with reference to the accompanying drawings, in which:
Figure 1 is an exploded perspective view of an apparatus for shielding noise which includes a through type capacitor according to the prior art;
Figure 2 is a sectional view of the through type capacitor shown in FIG. 1;
Figure 3 is an exploded perspective view of a capacitor of the present invention;
Figure 4 is a sectional view of the capacitor shown in Figure 3; and
Figure 5 is a front view of a capacitor in which insulating tubes respectively enclose peripheral surfaces of electrode insulating pipes of the capacitor.

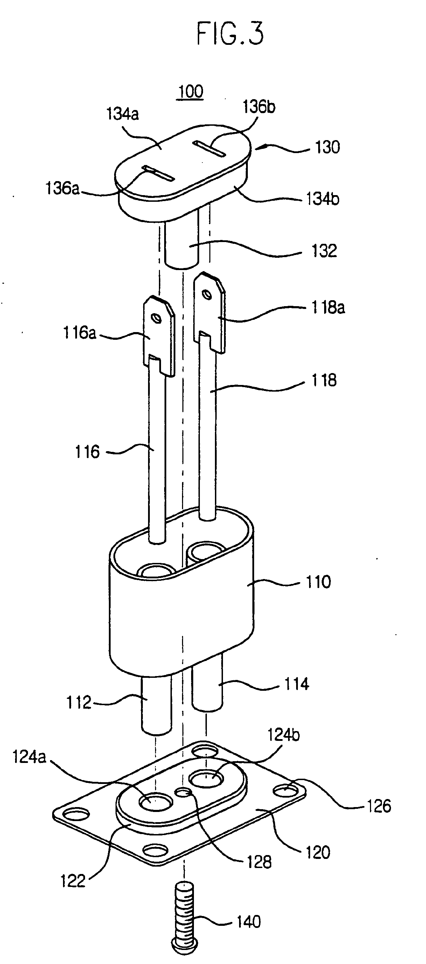

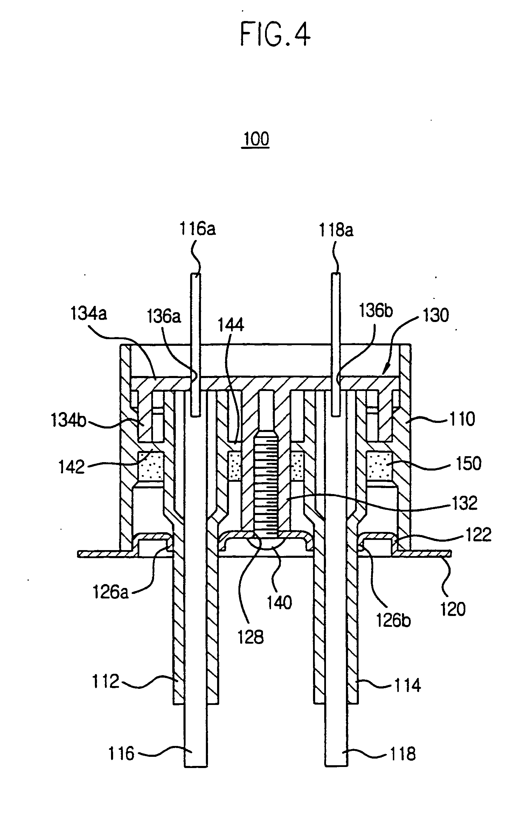

Figure 3 is an exploded perspective view of a capacitor 100 for a magnetron of a microwave oven and Figure 4 is a sectional view of the capacitor 100 shown in Figure 3.

As shown in Figures 3 and 4, the capacitor 100 includes an insulation case 110 having a pair of electrode insulating pipes 112 and 114 integrally formed therewith, a ground plate 120 for shielding microwave noise generated from the magnetron (not shown), which is combined at a lower portion of the insulation case 110 with the insulation case 110 so that the electrode insulating pipes 112 and 114 extend through the ground plate, a pair of electrodes 116 and 118 for supplying electric current to the magnetron which extend through the electrode insulating pipes 112 and 114 of the insulation case 110, and a cover 130 for fixing the electrodes 116 and 118 to the insulation case 110, which is inserted through an upper opening of the insulation case 110 into the insulation case 110.

Referring to Figures 3 and 4, the ground plate 120 is made of conductive material, of which a surface is projected at a desired height by a press. The ground plate 120 generally has a rectangular shape, of which an upright portion 122 has an ellipse shape. A pair of through-holes 124a and 124b is formed at a desired distance from each other in the upright portion of the ground plate 120 so that the electrode insulating pipes 112 and 114 respectively extend through the through-holes 124a and 124b. Flange portions 126a and 126b are formed at the upright portion 122 in such a manner of bending and downwardly extending a plate around the through-holes 124a and 124b at a desired length.

Four through-holes 126 are respectively formed at four corners of the ground plate 120, through which the capacitor 100 can be fixed to a shield case (not shown). Furthermore, a screwed hole 128 is formed between the through-holes 124a and 124b in the upright portion 122 of the ground plate 120 in order to insert a screw 140 when the cover 130 is combined with the insulation case 110 by the screw 140.

The insulation case 110 is made from thermostatic resin or thermoplastic resin having excellent insulation properties. The insulation case 110 has an ellipse shape corresponding to that of the upright portion 122 of the ground plate 120, which also has a desired height. The electrode insulating pipes 112 and 114 are respectively and integrally formed with the insulation case 110.

The electrode insulating pipes 112 and 114, which respectively have an upper end positioned in the insulation case 110 and a lower end extending out of the insulation case 110, are supported by a fixing plate 142 at an intermediate position of the insulation case 110 in order to be integrated with the insulation case 110. A through hole 144 is formed between the electrode insulating pipes 112 and 114 in the fixing plate 142, through which a connecting rod 132 of the fixing cover 130 extends. As a screwed recess in which a screw is to be screwed is formed in the connecting rod 132 of the fixing cover 130, the fixing cover 130 can be fixed to the ground plate 120 by means of the screw when assembling the capacitor 100.

As shown in Figure 4, meanwhile, the electrode insulating pipes 112 and 114 have a reduced diameter at a position near a lower end portion of the insulation case 110.

The electrodes 116 and 118 are conductive metallic rods that have a predetermined diameter, and respectively have tabs 116a and 118a attached to each end thereof to apply a high voltage to the magnetron. The electrodes 116 and 118 extend through the electrode insulating pipes 112 and 114 which respectively extend through the through-holes 124a and 124b of the ground plate 120.

The fixing cover 130 includes a body portion 134a having an ellipse shape, a supporting wall 134b extending downwardly from an edge of the body portion 134a, and a hollow connecting rod 132 which extends downwardly from a centre portion of the body portion 134a and of which a distal end comes in contact with the upright portion 122 of the ground plate 120. A pair of slots 136a and 136b are perforated side by side at a desired distance from each other in the body portion 134a of the fixing cover 130. The slots are coaxial with the electrode insulating pipes 112 and 114 and the electrodes 116 and 118, or are eccentric from axes of the electrodes 116 and 118 and the electrode insulating pipes 112 and 114. The tabs 116a and 118a of the electrodes 116 and 118, which respectively pass through the electrode insulating pipes 112 and 114 of the insulation case 110, respectively extend through the slots 136a and 136b.

An electric wave absorbing material 150 is further disposed in a lower space of the insulation case 110 to shield against leakage of the microwave noise, thereby improving the shielding of the noise. The electric wave absorbing material 150 also has an ellipse shape, which has a pair of through-holes through which the electrode insulating pipes 112 and 114 are extended, and which has a through-hole through which the connecting rod 132 of the fixing cover 130 is extended. A mixture of ferromagnetic powder and organic material, rubber or insulation resin is used as the electric wave absorbing material 150 which is formed by molding the mixture.

In a capacitor 100 as described above, the electric wave absorbing material 150 is inserted in the lower space of the insulation case 110. At this time, the electric wave absorbing material 150 encloses the electrode insulating pipes 112 and 114.

Then, the lower end of the insulation case 110 is secured on the upright portion 122 of the ground plate 120 while the electrode insulating pipes 112 and 114 of the insulation case 110 extend through the through-holes 124a and 124b formed in the upright portion 122 of the ground plate 120. The electrodes 116 and 118 extend through the electrode insulating pipes 112 and 114 of the insulation case 110, while the fixing cover 130 is inserted through the upper opening of the insulation case 110 into the insulation case 110. At this time, the connecting rod 132 of the fixing cover 130 extends through the fixing plate 142 connecting the electrode insulating pipes 112 and 114 to the insulation case 110 so as to come in contact with the upright portion of 122 of the ground plate 120 while facing the screwed hole 128. When the fixing cover 130 is combined with the insulation case 110, the tabs 116a and 118a of the electrodes 116 and 118 extend through the slots 136a and 136b formed in the body portion 134a of the fixing cover 130 and the insulation case 110, as shown in Figure 4.

The capacitor 100 when assembled as described above is attached through the ground plate 120 to the shield case (not shown), while the tabs 116a and 118a are each attached to the respective ends of electrodes 116 and 118 extending out of the shield case.

The tabs 116a and 118a of the electrodes 116 and 118 are connected to an outer electric source, and the other ends of the electrodes 116 and 188 are connected to a choke coil (not shown) so that the electric current is supplied to the magnetron through the electrodes 116 and 118, the choke coil, a cathode and an anode.

When the microwave oven is operated in the state that food to be cooked is placed in a cooking chamber of the microwave oven, the magnetron (not shown) emits microwaves. At this time, the magnetron emits not only the microwaves needed to cook the food but also unnecessary microwave noise. Such microwave noise flows back to a filament and the cathode to supply the electric current.

The microwave noise flowing back to the capacitor 100 from the magnetron is partially set off by induction resistance of the choke coil (not shown) connected to the filament (not shown) of the magnetron. The rest of the microwave noise passes through the electrodes 116 and 118 connected to the choke coil which in turn is shielded by means of the flange portions 126a and 126b of the ground plate 120 enclosing the electrodes 116 and 118.

As described above, the capacitor 100 has a simple structure as compared to previous known capacitors. The flange portions of the ground plate prevent leakage of the microwave noise, while the electric wave absorbing material disposed in the lower space of the insulation case can absorb the leaked microwave noise, thereby providing improved shielding of the leaked microwave noise.

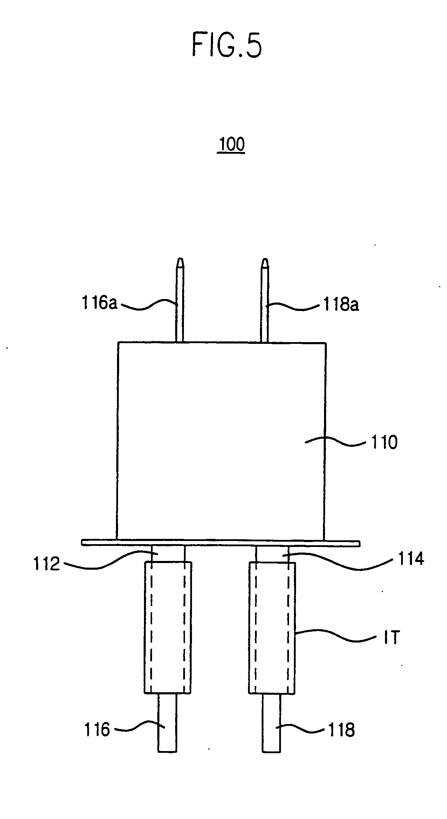

As shown in Figure 5, an insulating tube IT is coated on the lower end portion of the electrode insulating pipes 112 and 114 of the capacitor 100.

High voltage of about 10kV is applied to the electrodes 116 and 118 mounted in the capacitor 100, thereby arc is generated along the peripheral surfaces of the electrode insulating pipes 112 and 114. The insulating tube IT restrains the arc generated on the peripheral surfaces of the electrode insulating pipes 112 and 114 so as to prevent the arc from being generated between the electrodes 116 and 118, and the ground plate 120.

In the capacitor described, the electric wave absorbing material absorbs the microwave noise so that it is possible to reduce the electric obstruction, which is caused by noise, in home appliances near the microwave oven.

In addition, there is an advantage in that the capacitor has a simple structure, which results in reducing the manufacturing cost. There is the further advantage that as the structure of the capacitor described is simplified, the assembling rate can be remarkably improved so as to increase the productivity.

It will be appreciated that variations in, and modifications to, the embodiments described and illustrated may be made within the scope of the appended claims.

## Claims

1. A capacitor (100) for a magnetron of a microwave oven comprising:
an insulation case (110) having a pair of electrode insulating pipes (112, 114) respectively and integrally formed at a predetermined distance from each other on the insulation case (110);
a ground plate (120) which is combined with the insulation case (110) for absorbing and shielding noises such as unnecessary microwaves generated from the magnetron, the ground plate (120) having an upright portion (122) upwardly arising at a desired height and a pair of through-holes (124a, 124b) formed at a predetermined distance from each other in the upright portion; and
a pair of electrodes (116, 118) each having a respective fixing tab (116a, 118a), the electrodes being arranged to extend through the insulation case (110) and the ground plate (120), for supplying electric current to the magnetron,
wherein the electrode insulating pipes (112, 114) extend through the through-holes (124a, 124b) of the upright portion; and
the diameters of the electrode insulating pipes become small at a position near a lower end portion of the insulation case (110).

2. A capacitor (100) as claimed in Claim 1, wherein the insulation case (110) is combined with the ground plate (120) such that the pair of electrode insulating pipes (112, 114) of the insulation case (110) extend through the ground plate (120), and the pair of electrodes (116, 118) respectively extend through the electrode insulating pipes (112, 114).

3. A capacitor (100) as claimed in Claim 2, further comprising a cover (130) for fixing the pair of electrodes (116, 118), wherein the fixing cover (130) is disposed over upper ends of the electrode insulating pipes (112, 114) of the insulation case (110) such that the tabs (116a, 118a) of the pair of electrodes (116, 118) extend through the fixing cover (130).

4. A capacitor (100) as claimed in Claim 3, wherein the upwardly rising upright portion (122) is formed at a surface of the ground plate (120), is elliptical, and is provided with an aperture through which a fixing pipe (132) extending from the fixing cover (130) extends.

5. A capacitor (100) as claimed in any preceding claim, wherein a space defined by the insulation case (110) and the ground plate (120) is filled with insulating resin.

6. A capacitor (100) as claimed in any preceding claim, wherein a flange portion (126a, 126b) having a desired length is integrally formed around through-holes (124a, 124b) formed in the upright portion (122) of the ground plate (120).

7. A capacitor (100) as claimed in any preceding claim, wherein electric wave absorbing material (150) for preventing leakage of microwave noise is disposed in a space defined by the insulation case (110) and the ground plate (120).

8. A capacitor (100) as claimed in Claim 7, wherein the electric wave absorbing material (150) is a mixture of ferromagnetic powder and organic insulation material.

9. A capacitor (100) as claimed in any preceding claim, wherein insulating tubes (IT) are coated at respective lower ends of the electrode insulating pipes (112, 114) to prevent electric arc from being generated on peripheral surfaces of the electrode insulating pipes (112, 114).

## Patentansprüche

1. Kondensator (100) für ein Magnetron eines Mikrowellenofens, der umfasst:
ein Isoliergehäuse (110), das ein Paar Elektroden-Isolierrohre (112, 114) besitzt, die jeweils und integral in einem vorgegebenen Abstand voneinander an dem Isoliergehäuse (110) ausgebildet sind;
eine Grundplatte (120), die mit dem Isoliergehäuse (110) zum Absorbieren und Abschirmen von Störfrequenzen, beispielsweise unnötiger Mikrowellen, die durch das Magnetron erzeugt werden, kombiniert ist, wobei die Grundplatte (120) mit einem senkrechten Abschnitt (122), der sich nach oben hin in einer erwünschten Höhe erhebt, und einem Paar Durchgangsöffnungen (124a, 124b), die in einem vorgegebenen Abstand voneinander in dem senkrechten Abschnitt ausgebildet sind, versehen ist; und
eine Paar Elektroden (116, 118), die jeweils einen entsprechenden Befestigungsvorsprung (116a, 118a) besitzen, wobei die Elektroden angeordnet sind, um sich durch das Isoliergehäuse (110) und die Grundplatte (120) zu erstrecken, um elektrischen Strom an das Magnetron zu liefern,
wobei sich die Elektroden-Isolierrohre (112, 114) durch die Durchgangsöffnungen (124a, 124b) des senkrechten Abschnitts erstrecken; und
sich die Durchmesser der Elektroden-Isolierrohre (112, 114) an einer Stelle nahe des unteren Endabschnitts der Isoliergehäuses (110) verjüngen.

2. Kondensator (100) nach Anspruch 1, wobei das Isoliergehäuse (110) mit der Grundplatte (120) derart kombiniert ist, dass sich das Paar Elektroden-Isolierrohre (112, 114) des Isoliergehäuses (110) durch die Grundplatte (120) erstreckt und sich das Elektrodenpaar (116, 118) jeweils durch die Elektroden-Isolierrohre (112, 114) erstreckt.

3. Kondensator (100) nach Anspruch 2, der weiterhin eine Abdeckung (130) zum Befestigen des Elektrodenpaars (116, 118) umfasst, wobei die Befestigungsabdeckung (130) über oberen Enden der Elektroden-Isolierrohre (112, 114) des Isoliergehäuses (110) derart angeordnet ist, dass sich die Vorsprünge (116a, 118a) des Elektrodenpaars (116, 118) durch die Befestigungsabdeckung (130) erstrecken.

4. Kondensator (100) nach Anspruch 3, wobei der sich nach oben erhebende senkrechte Abschnitt (122) auf einer Oberfläche der Grundplatte (120) ausgebildet ist, elliptisch ist und mit einer Apertur versehen ist, durch die sich ein Befestigungsrohr (132) erstreckt, das sich von der Befestigungsabdeckung (130) aus erstreckt.

5. Kondensator (100) nach einem der vorherigen Ansprüche, wobei ein durch das Isoliergehäuse (110) und die Grundplatte (120) definierter Raum mit Isolierharz gefüllt ist.

6. Kondensator (110) nach einem der vorherigen Ansprüche, wobei ein Flanschabschnitt (126a, 126b) mit einer erwünschten Länge integral um Durchgangslöcher (124a, 124b) gebildet ist, die in dem senkrechten Abschnitt (122) der Grundplatte (120) gebildet sind.

7. Kondensator (100) nach einem der vorherigen Ansprüche, wobei elektrische Wellen absorbierendes Material (150), das Austreten der Störfrequenz verhindern soll, in einem durch das Isoliergehäuse (110) und die Grundplatte (120) definierten Raum angeordnet ist.

8. Kondensator (100) nach Anspruch 7, wobei das elektrische Wellen absorbierende Material (150) eine Mischung aus ferromagnetischem Pulver und organischem Isoliermaterial ist.

9. Kondensator (100) nach einem der vorherigen Ansprüche, wobei Isolierschläuche (IT) die jeweiligen unteren Enden der Elektroden-Isolierrohre (112, 114) ummanteln, um die Bildung von Lichtbögen auf Umfangsflächen der Elektroden-Isolierrohre (112, 114) zu verhindern.

## Revendications

1. Condensateur (100) pour un magnétron d'un four à micro-ondes, comportant :
une enveloppe isolante (110) ayant une paire de tuyaux d'isolation d'électrode (112, 114), respectivement, et formés en un seul bloc à une distance prédéterminée l'un de l'autre sur l'enveloppe isolante (110),
une plaque de masse (120) qui est combinée à l'enveloppe isolante (110) afin d'absorber et de faire écran aux bruits, tels que des micro-ondes inutiles générées à partir du magnétron, la plaque de masse (120) ayant une partie droite (122) montant vers le haut à une hauteur souhaitée, et une paire de trous traversants (124a, 124b) formés à une distance prédéterminée l'un de l'autre dans la partie droite, et
une paire d'électrodes (116, 118) ayant chacune une patte de fixation respective (116a, 118a), les électrodes étant agencées pour s'étendre à travers l'enveloppe isolante (110) et la plaque de masse (120), pour fournir un courant électrique au magnétron,
dans lequel les tuyaux d'isolation d'électrode (112, 114) s'étendent à travers les trous traversants (124a, 124b) de la partie droite, et
les diamètres des tuyaux d'isolation d'électrode rétrécissent dans une position proche d'une partie d'extrémité inférieure de l'enveloppe isolante (110) .

2. Condensateur (100) selon la revendication 1, dans lequel l'enveloppe isolante (110) est combinée avec la plaque de masse (120) de telle sorte que la paire de tuyaux d'isolation d'électrode (112, 114) de l'enveloppe isolante (110) s'étendent à travers la plaque de masse (120), et la paire d'électrodes (116, 118) s'étendent respectivement à travers les tuyaux d'isolation d'électrode (112, 114).

3. Condensateur (100) selon la revendication 2, comportant en outre un couvercle (130) pour fixer la paire d'électrodes (116, 118), dans lequel le couvercle de fixation (130) est disposé au-dessus des extrémités supérieures des tuyaux d'isolation d'électrode (112, 114) de l'enveloppe isolante (110,) de sorte que les pattes (116a, 118a) de la paire d'électrodes (116, 118) s'étendent à travers le couvercle de fixation (130).

4. Condensateur (100) selon la revendication 3, dans lequel la partie droite montant vers le haut (122) est formée au niveau d'une surface de la plaque de masse (120), est elliptique et est munie d'une ouverture à travers laquelle s'étend un tuyau de fixation (132) s'étendant à partir du couvercle de fixation (130).

5. Condensateur (100) selon l'une quelconque des revendications précédentes, dans lequel un espace défini par l'enveloppe isolante (110) et la plaque de masse (120) est rempli d'une résine isolante.

6. Condensateur (100) selon l'une quelconque des revendications précédentes, dans lequel une partie de rebord (126a, 126b) ayant une longueur souhaitée est formée en un seul bloc autour des trous traversants (124a, 124b) formés dans la partie droite (122) de la plaque de masse (120).

7. Condensateur (100) selon l'une quelconque des revendications précédentes, dans lequel un matériau absorbeur d'ondes électriques (150) pour empêcher une fuite de bruits de micro-ondes est disposé dans un espace défini par l'enveloppe isolante (110) et la plaque de masse (120).

8. Condensateur (100) selon la revendication 7, dans lequel le matériau absorbeur d'ondes électriques (150) est un mélange de poudre ferromagnétique et d'un matériau d'isolation organique.

9. Condensateur (100) selon l'une quelconque des revendications précédentes, dans lequel des tubes isolants (IT) recouvrent les extrémités inférieures respectives des tuyaux d'isolation d'électrode (112, 114) pour empêcher qu'un arc électrique soit généré sur les surfaces périphériques des tuyaux d'isolation d'électrode (112, 114).
